# EUROPÄISCHE PATENTSCHRIFT

(11) **EP 0 923 971 B1**
(45) Veröffentlichungstag und Bekanntmachung des Hinweises auf die Patenterteilung: **14.05.2003**
(21) Anmeldenummer: 98250440.9
(22) Anmeldetag: 17.12.1998
(51) Int. Cl.: B01D 21/24

(54) **Verfahren und Vorrichtung zur Beschickung von Absetzbecken**
Process and apparatus for feeding settling tanks
Procédé et dispositif pour l'alimentation des bassins de sédimentation

(30) Priorität: 22.12.1997 DE 19758360
(43) Veröffentlichungstag der Anmeldung: 23.06.1999
(73) Patentinhaber: Berliner Wasserbetriebe Anstalt d. öffentlichen Rechts, 10713 Berlin-Wilmersdorf (DE); Richter, Ewald, 15827 Blankenfelde (DE)
(72) Erfinder: Richter, Ewald, 16827 Blankenfelde (DE)
(74) Vertreter: Gulde, Klaus W.

(56) Entgegenhaltungen:
- GB-A- 463 213
- GB-A- 847 203
- GB-A- 2 293 988
- US-A- 2 053 636
- US-A- 2 205 199
- US-A- 2 678 730
- PATENT ABSTRACTS OF JAPAN vol. 008, no. 077 (C-218), 10. April 1984 & JP 59 004407 A (MITSUBISHI JUKOGYO KK), 11. Januar 1984

## Beschreibung

Die Erfindung betrifft ein Verfahren zur Beschickung von Absetzbecken, dem über ein vertikales Zulaufrohr sowie einen konzentrisch zu diesem angeordneten Eintragzylinder ein Gemisch aus gereinigtem Abwasser und belebtem Schlamm zugeführt und in dem eine Phasentrennung durchgeführt und das gereinigte Abwasser in einer Klarwasserzone aus dem Absetzbecken herausgeführt und sedimentierter Schlamm unter dem Schlammspiegel über einen Rücklaufschlammabzug abgeführt wird. Eine zugehörige Vorrichtung enthält neben einem sich durch einen Boden des Absetzbeckens vertikal nach oben erstreckenden Zulaufrohr einen den oberen Abschnitt des Zulaufrohres konzentrisch umschließenden Eintragzylinder, dessen unteres Ende in einem vorbestimmten Abstand über dem Boden des Absetzbeckens endet und über den dem Absetzbecken ein Gemisch aus gereinigtem Abwasser und belebtem Schlamm über mehrere Zulaufebenen zugeführt werden kann.

Ein Absetzbecken, dem das Wasser-Schlamm-Gemisch gleichzeitig über mehrere Zulaufebenen zugeführt wird, ist aus GB 847 203 A bekannt. Durch die Verwendung mehrerer Zuläufe in verschiedenen Ebenen soll eine möglichst gleichmäßige Wasser-/Schlamm-Verteilung erreicht werden, was aber auch bedeutet, daß der bereits sedimentierte Schlamm stets wieder neu aufgewirbelt wird.

Durch die DE 27 47 322 A1 ist ein Verfahren zum Abtrennen von Feststoffen von einer Flüssigkeit, bei dem eine Schlammasse ausgebildet und eine Feststoffe enthaltende Flüssigkeit in die Schlammasse eingeführt wird, dann Flüssigkeit von den Feststoffen abgetrennt, geklärte Flüssigkeit auf einem Niveau oberhalb der Schlammasse abgezogen und Schlammkonzentrat aus einem unteren Bereich der Schlammasse abgeführt wird, bekannt.

Dabei wird ein Beschickungsstrom einer, Feststoffe enthaltenden, Flüssigkeit nach unten in die Schlammasse eingeführt und wenigstens ein Teil des zugeführten Beschickungsstromes aufgrund abdichtender Wirkung von Schlamm höherer Dichte in der Schlammasse radial und nach oben abgelenkt, Schlamm aus der Schlammasse in den Weg des abgelenkten Beschickungsstromes umgewälzt, abgelenkter Beschickungsstrom mit umgewälztem Schlamm vermischt und wenigstens ein Teil des Gemisches aus abgelenktem Beschickungsstrom und umgewälztem Schlamm radial nach außen in eine oberhalb der Schlammasse befindliche Zone geführt.

Bei diesem Verfahren wird der Beschickungsstrom mit einer, Feststoffe enthaltenden, Flüssigkeit nach unten in eine Schlammasse eingeführt, wodurch grundsätzlich ein unkontrolliertes Aufwirbeln der sedimentierten Schalammasse verhindert wird. Die Einführung erfolgt jedoch ständig in gleicher Höhe, so daß ein Anpassen an unterschiedliche Höhen des sedimentierten Schlammes und damit eine optimale Zuführung des Beschickungssystems nicht erreichbar ist. Diese Nachteile wirken sich besonders in einer Kläranlage für Abwasser bei der Einführung eines Gemisches aus gereinigtem Abwasser und belebtem Schlamm in ein Nachklärbecken aus.

In dem Artikel "Strömungsmechanische Untersuchungen einer neuartigen Zulauf- und Ablaufvorrichtung für Nachklärbecken" in der Zeitschrift "awt. Abwassertechnik Heft 1/1997 Seite 18" wird ausgeführt :

"Bei runden Nachklärbecken erfolgt die Einspeisung des Abwassers über das Mittelbauwerk, hier findet auch die Umlenkung der axialen Zuströmung in eine radial nach außen gerichtete Strömung statt. Die Gestaltung dieser Umlenkung und die Höhe der Einspeisung in das Nachklärbecken haben einen entscheidenden Einfluß auf die Strömung im Nachklärbecken. Die aus dem Mittelbauwerk austretenden Strahlen sollten horizontal nach außen gerichtet sein und im Bereich der Trennzone liegen, um nicht den bereits eingedickten Schlamm in der Speicher- bzw. Eindick- und Räumzone aufzuwirbeln bzw. die Klarwasserzone zu zerstören."

In dem Artikel wird darauf hingewiesen, daß die aus dem Mittelbauwerk austretenden Strahlen im Bereich der Trennzone liegen sollen. Mit der offenbarten Lösung ist diese Forderung grundsätzlich in einem Nachklärbecken nur bedingt realisierbar, da die Lage der Zonen in Abhängigkeit von dem Volumenstrom des einzuführenden Gemisches sehr unterschiedlich ist. Die Einhaltung der Maßnahme erfordert ein sehr aufwendiges Regelungsregime beim Betreiben eines derartigen Nachklärbekkens.

Der Erfindung liegt die Aufgabe zugrunde, ein Verfahren und eine Vorrichtung der eingangs genannten Art zu schaffen, mit denen die Zuführung des Gemisches aus gereinigtem Abwasser und belebtem Schlamm in einer Höhenlage im Absetzklärbecken (Nachklärbecken) durchgeführt wird, die mit dem Schlammspiegel im Absetzbecken korreliert.

Erfindungsgemäß wird die Aufgabe gelöst durch die Merkmale der Ansprüche 1 und 7. Zweckmäßige Ausgestaltungen sind Gegenstand der Unteransprüche.

Danach wird das Abwasser-Schlamm-Gemisch jeweils in einer im Bereich des Schlammspiegels liegenden Höhenlage durch einen unteren Zulauf oder einen oberen Zulauf oder durch einen zwischen diesen einstellbaren mittleren Zulauf zugeführt, wobei die untere Begrenzung des unteren Zulaufs oberhalb der sedimentierten Feststoffschicht des belebten Schlammes und die obere Begrenzung des oberen Zulaufes unterhalb der Klarwasserzone liegt.

Hierbei wird das Gemisch in das Nachklärbecken in einer Höhe eingeführt, bei der die Trennung zwischen dem gereinigten Abwasser und dem belebten Schlamm optimal durchgeführt werden kann. Durch die Bildung von Makroflocken im Einlauf beschleunigt sich der Sedimentationsprozeß des belebten Schlammes. Auf diese Weise kann der Durchsatz im Nachklärbecken bei einer hohen Qualität des gereinigten Abwassers erhöht werden.

Vorzugsweise wird bei einem niedrigen Schlammspiegel das Gemisch durch den unteren Zulauf oberhalb des Schlammspiegels dem Nachklärbecken zugeführt.

Vorteilhaft ist es für die Zuführung des Gemisches durch den oberen Zulauf, wenn die obere Begrenzung des oberen Zulaufes in einem Bereich zwischen 0,5 m - 1,0 m unter dem Klarwasserabzug liegt.

Eine bevorzugte Lösung besteht darin, daß das Gemisch durch den einstellbaren mittleren Zulauf dem Nachklärbecken zugeführt wird, wobei die obere Begrenzung des mittleren Zulaufes zwischen 0 m - 0,5 m unterhalb des Schlammspiegels liegt.

Vorteilhaft ist es, wenn die obere Begrenzung des mittleren Zulaufes zwischen 0,3 m - 0,4 m unterhalb des Schlammspiegels liegt.

Die optimale Höhenlage des mittleren Zulaufes kann empirisch in Abhängigkeit von einem oder mehreren der folgenden Faktoren eingestellt werden :
- der Höhe des Schlammspiegels im Nachklärbecken,
- dem Volumenstrom im mittleren Zulauf,
- dem Volumenstrom im Rücklaufschlammabzug,
- dem Trockensubstanzgehalt des Gemisches aus belebtem Schlamm und dem gereinigten Abwasser,
- dem Schlammvolumenindex des belebten Schlammes.

Bei einer zur Durchführung dieses Verfahrens geeigneten Vorrichtung ist dazu der Eintragzylinder im Bereich der Klarwasserzone geschlossen und weist einen jeweils verschließbaren oberen und unteren sowie mehrere übereinander liegende, verschließbare mittlere Zuläufe auf, wobei die untere Begrenzung des unteren Zulaufs oberhalb der sedimentierten Feststoffschicht des belebten Schlammes und die obere Begrenzung des oberen Zulaufes unterhalb der Klarwasserzone liegt.

Der Umfang des Eintragzylinders kann als ein Vieleck, vorzugsweise ein Sechseck, aber auch rund ausgebildet sein.

Es ist möglich, daß die Zuläufe mit unterschiedlicher Höhe ausgeführt sind, wobei die Höhen der Zuläufe vorzugsweise von dem oberen Zulauf bis zu dem unteren Zulauf abnehmen.

Zweckmäßigerweise sind die Zuläufe in zwei unterschiedlichen Höhen ausgebildet.

Eine bevorzugte Ausführungsform besteht darin, daß die Zuläufe in der Außenwand des Eintragzylinders durch zu öffnende Verschlußelemente verschlossen sind.

Die Verschlußelemente können als horizontal und quer zur Längsachse des Eintragzylinders angeordnete Klappen ausgebildet sein.

Es ist auch möglich, daß die Verschlußelemente als Jalousien ausgebildet sind.

Weiterhin ist es möglich, daß sich die Verschlußelemente vertikal in Richtung der Längsachse des Eintragzylinders jeweils über die Höhe eines Zulaufes erstrecken.

Eine bevorzugte Ausführungsform besteht darin, daß die Verschlußelemente unmittelbar am Zulaufrohr angeordnet sind und einen Schließmechanismus aufweisen, wobei die Zuläufe durch im wesentlich horizontal zueinander angeordnete Zwischenböden voneinander getrennt sind, die sich von dem Umfang des Zulaufrohres bis zu der Außenwand des Eintragzylinders erstrekken, wobei die Außenwand des Eintragzylinders im Bereich jedes Zulaufes offen ist.

Hierbei ist es vorteilhaft, wenn die Zwischenböden dem Strömungsverlauf des Gemisches vom Zulaufrohr zur Außenwand des Eintragzylinders angepaßt sind.

Aus statischen und strömungstechnischen Gründen ist es zweckmäßig, daß im Bereich der Zuläufe der Eintragzylinder in einzelne Sektoren unterteilt ist, die durch vertikale Zwischenwände voneinander getrennt sind, wobei jeder Sektor in der Außenwand des Eintragzylinders eine Öffnung und am Umfang des Zulaufrohres eine verschließbare Rohröffnung aufweist.

Die Zwischenwände können in einer strömungstechnisch günstigen Form ausgebildet sein.

Die Erfindung wird an einem Ausführungsbeispiel näher erläutert.

In der zugehörigen Zeichnung zeigen :
- Fig. 1: ein Nachklärbecken mit einer Vorrichtung zum Einleiten eines Gemisches aus belebtem Schlamm und gereinigtem Abwasser in schematischer Darstellung,
- Fig. 2: das Nachklärbecken mit der Vorrichtung nach Fig. 1 mit einem geänderten Zulauf,
- Fig. 3: das Nachklärbecken mit der Vorrichtung nach Fig. 1 mit einer weiteren Änderung des Zulaufes,
- Fig. 4: die Vorrichtung zum Einleiten des Gemisches aus belebtem Schlamm und gereinigtem Abwasser in perspektivischer Darstellung,
- Fig. 5: die Draufsicht auf die Vorrichtung nach Fig. 4,
- Fig. 6: die Vorrichtung nach Fig. 4 in einer weiteren Ausführungsform,
- Fig. 7: die Draufsicht auf die Vorrichtung nach Fig. 6.

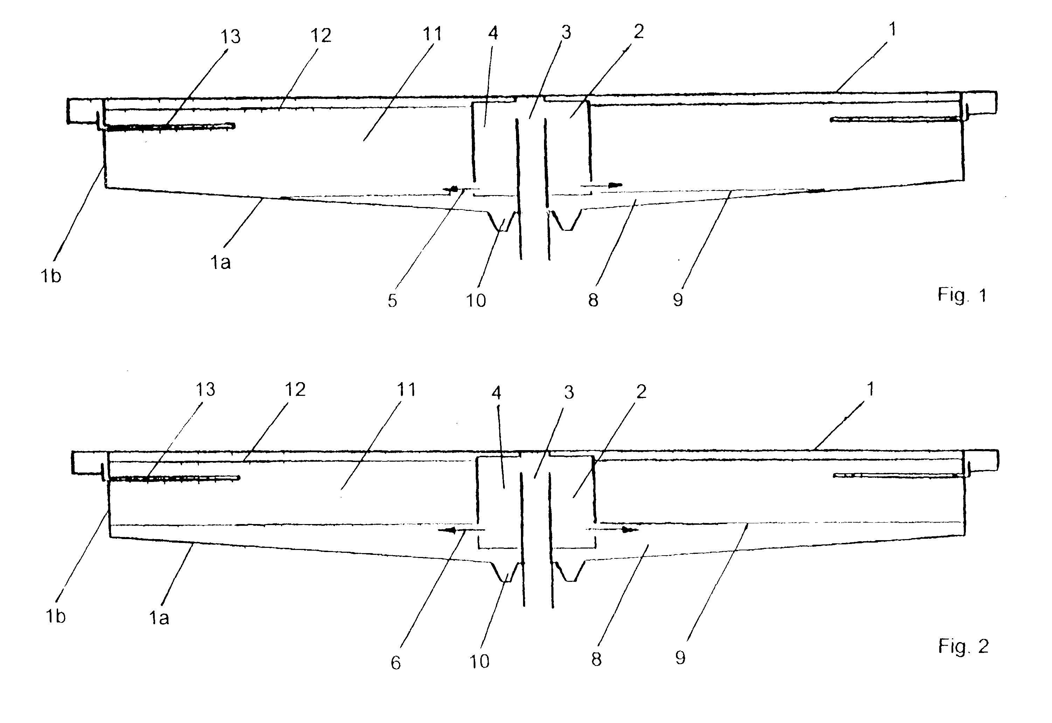

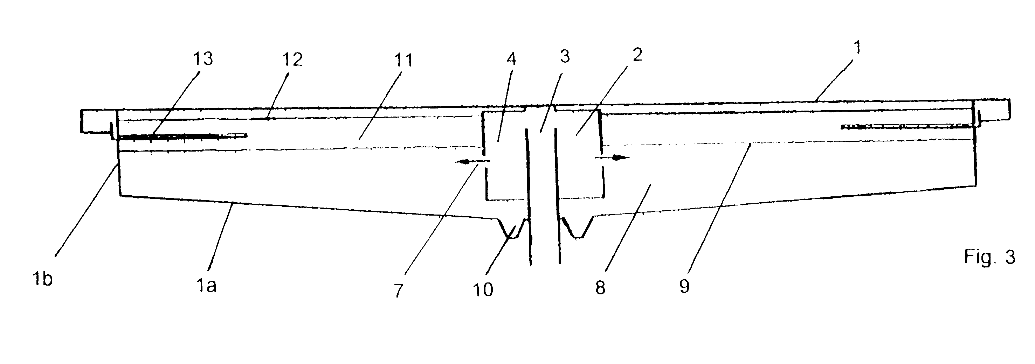

In den Fig. 1 bis 3 ist ein Nachklärbecken 1 einer Kläranlage für Abwasser als ein Rundbecken mit einem flach geneigten, trichterförmigen Boden 1a sowie einer Seitenwand 1b dargestellt. In dem Nachklärbecken 1 ist zentrisch eine Vorrichtung 2 zum Einleiten eines Gemisches aus belebtem Schlamm 8 und gereinigtem Abwasser 11 angeordnet. Das Gemisch wird über die Vorrichtung 2 dem Nachklärbecken 1 aus einem nicht gezeigten Belebungsbecken zugeführt. In dem Nachklärbecken 1 erfolgt die Trennung des belebten Schlammes 8 von dem gereinigten Abwasser 11 durch die Sedimentation des belebten Schlammes 8.

Die Vorrichtung weist ein Zulaufrohr 3 sowie einen konzentrisch zu diesem angeordneten Eintragzylinder 4 mit Zuläufen 5; 6; 7 für das Gemisch auf. Das Zulaufrohr 3 erstreckt sich durch den Boden 1a des Nachklärbeckens 1 vorzugsweise an dessen tiefstem Bereich vertikal nach oben, wobei der Eintragzyinder 4 den oberen Abschnitt des Zulaufrohres 3 konzentrisch umschließt. Das untere Ende des Eintragzylinders 4 endet in einem vorbestimmten Abstand über dem Boden 1a des Nachklärbeckens 1, so daß ein Durchtritt für den sedimentierten Schlamm 8 offen bleibt.

Um das Zulaufrohr 3 ist konzentrisch in dem Boden 1a des Nachklärbeckens 1 ein Rücklaufschlammabzug 10, vorzugsweise als ein Schlammeindickraum ausgebildet, angeordnet.

In dem oberen Bereich der Seitenwand 1b des Nachklärbeckens 1 sind ein oder mehrere Klarwasserabzugsrohre 13 als Klarwasserabzug zum Abfließen des gereinigten Abwassers nach der Sedimentation des belebten Schlammes 8 angeordnet. Das gereinigte Abwasser kann auch in anderer an sich bekannter Weise, beispielsweise über Rinnen, abgeführt werden.

Eine ausreichende Größe des Nachklärbeckens 1 ist die Voraussetzung für die Wirksamkeit der Trennung des belebten Schlammes 8 vom gereinigten Abwasser 11. Es wird dabei von einer Unterteilung des Machklärbeckens 1 in unterschiedliche Zonen in vertikaler Richtung ausgegangen. Die obere Zone ist dabei die Klarwasserzone mit einer vorgesehenen Mindeststufe von 0,50 m. Sie dient dazu, eine von der Wehrkante ausgehende Sogwirkung zu mildern und weitere unvermeidliche Einflüsse, wie eine ungleichmäßige Flächenbeschickung, auszugleichen. Die darunter liegende Zone ist die Trennzone. In ihr erfolgt die Verteilung des Gemisches aus belebtem Schlamm 8 und gereinigtem Abwasser 11. Dabei finden Flockungsvorgänge statt, die den Absetzvorgang des belebten Schlammes 8 begünstigen. Der Absetzvorgang wird vom Maß der Turbulenzen beeinflußt, die der einströmende Zufluß des Gemisches verursacht. Die folgende Speicherzone dient der Aufnahme des aus dem Belebungsbecken zufließenden belebten Schlammes 8. Sie bildet praktisch eine Vergrößerung der Trennzone und wirkungstechnisch mit ihr eine Einheit. Der belebte Schlamm 8 besteht in der Regel aus Flocken mit einem Durchmesser von 10 µm bis 500 µm. Die Trennung des belebten Schlammes 8 vom gereinigten Abwasser 11 muß so erfolgen, daß möglichst wenige, einzelne Flocken des belebten Schlammes 8 in die Klarwasserzone des Nachklärbeckens 1 gelangen. Einzelne Flocken der Größe von 10 µm - 500 µm Durchmesser können aufgrund ihrer Größe und damit einer geringen Sinkgeschwindigkeit in der Trennzone bzw. Klarwasserzone des Nachklärbeckens 1 nur bei einer extrem niedrigen Flächenbeschickung sedimentiert werden.

Durch Messungen der Anmelderin wurde ermittelt, daß die Zuführung des Gemisches aus belebtem Schlamm 8 und gereinigtem Abwasser 11 in einer Höhenlage im Nachklärbecken 1 am günstigsten verläuft, die mit dem Schlammspiegel 9 im Nachklärbecken 1 korreliert. Vermutlich sind bei einer Einleitung in dieser Höhe die Flockungs- und Koagulationsvorgänge begünstigt.

Die Ergebnisse von Sedimentationsversuchen belebten Schlammes 8 weisen ebenfalls auf Koagulations- und Flockungsvorgänge beim Sedimentieren hin. Wird die Bildung von Makroflocken im Einlauf begünstigt, kann der Sedimentationsprozeß des belebten Schlammes 8 beschleunigt werden.

Der Schlammspiegel 9 verändert jedoch ständig seine Höhenlage im Nachklärbecken 1. Es wird deshalb die optimale Höhenlage des Zulaufes 5; 6; 7 im wesentlichen in Abhängigkeit von der Höhe des Schlammspiegels 9 eingestellt. Die optimale Höhenlage wird dabei empirisch zwischen einem unteren Zulauf 5 und einem oberen Zulauf 7 des Gemisches aus belebtem Schlamm 8 und gereinigtem Abwasser 11 in die Nachkläranlage 1 ermittelt.

Der untere Zulauf 5 wird so eingestellt, daß die untere Begrenzung des Zulaufes 5 oberhalb der sedimentierten Feststoffschicht des belebten Schlammes 8 liegt, wobei gleichzeitig der Abzug desselben über den Rücklaufschlammabzug 10 gesichert wird. Eine tiefere Einstellung des unteren Zulaufes 5 kann dazu führen, daß die sedimentierte Feststoffschlcht aufgewirbelt wird. Hierdurch entsteht ein erhöhter Feststoffgehalt im Ablauf der Nachklärung.

Um dieses zu vermeiden, liegt bei einem niedrigen Schlamm-Spiegel 9 der untere Zulauf 5 mit seiner unteren Begrenzung oberhalb des Schlammspiegels 9, wie in Fig. 1 gezeigt.

Der obere Zulauf 7 wird so eingestellt, daß keine Einleitung des Gemisches innerhalb der Klarwasserzone erfolgt. Dieses wird erreicht, indem der obere Zulauf 7 mit seiner oberen Begrenzung in einem Bereich zwischen 0,5 m - 1,0 m unter dem Klarwasserabzug liegt.

Zwischen dem unteren Zulauf 5 und dem oberen Zulauf 7 sind mittlere Zuläufe 6 einstellbar, wobei ein mittlerer Zulauf 6 in Fig. 2 gezeigt ist.

Bei der empirischen Einstellung der optimalen Höhenlage der mittleren Zuläufe 6 kann von einem oder mehreren der folgenden Faktoren ausgegangen werden:
- der Höhe des Schlammspiegels 9 im Nachklärbecken 1,
- dem Volumenstrom im mittleren Zulauf 6,
- dem Volumenstrom im Rücklaufschlammabzug 10,
- dem Trockensubstanzgehalt des Gemisches aus belebtem Schlamm 8 und gereinigtem Abwasser 11,
- dem Schlammvolumenindex des belebten Schlammes 8.

Die Messung des Schlammspiegels 9 erfolgt kontinuierlich in dem Nachklärbecken 1 mit an sich bekannten Meßverfahren. Nach der Messung der Höhe des Schlammspiegels 9 wird das Gemisch aus belebtem Schlamm 8 und gereinigtem Abwasser 11 durch einen der mittleren Zuläufe 6 zwischen 0 m - 0,5 m unterhalb des Schlammspiegels 9, vorzugsweise in einer Höhe von 0,3 m - 0,4 m, eingeleitet. Es wird dabei immer zwischen dem Schlammspiegel 9 und der Oberkante des entsprechenden mittleren Zulaufes 6 gemessen. Bei Untersuchungen hat ein mittlerer Zulauf 6 zwischen 0,3 m - 0,4 m den niedrigsten Feststoffgehalt im Klarlauf der Nachklärung ergeben. Eine Einleitung des Gemisches wesentlich tiefer als 0,5 m unterhalb des Schlammspiegels 9 kann zu Störungen der Sedimentation des belebten Schlammes 8 führen und somit eine Erhöhung der Feststoffteilchen im gereinigten Abwasser 11 verursachen.

Die Sicherung der Einstellung einer optimalen Höhe des mittleren Zulaufes 6 zwischen dem unteren Zulauf 5 und dem oberen Zulauf 7 ist besonders bei niedrigen Abwassertemperaturen wesentlich, da ein ungünstiges Flockulationsverhalten des belebten Schlammes 8 bei niedrigen Abwassertemperaturen vorliegt.

Das Verfahren der Zuführung des Gemisches aus belebtem Schlamm 8 und gereinigtem Abwasser 11 in unterschiedlichen Höhen des mittleren Zulaufes 6 zwischen einem definierten unteren Zulauf 5 und einem definierten oberen Zulauf 7 ist nicht auf das in den Fig. bis 3 gezeigte Nachklärbecken 1 beschränkt. Es ist möglich, dieses Verfahren insbesondere bei vertikal durchströmten Nachklärbecken 1 anderer Bauweise einzusetzen.

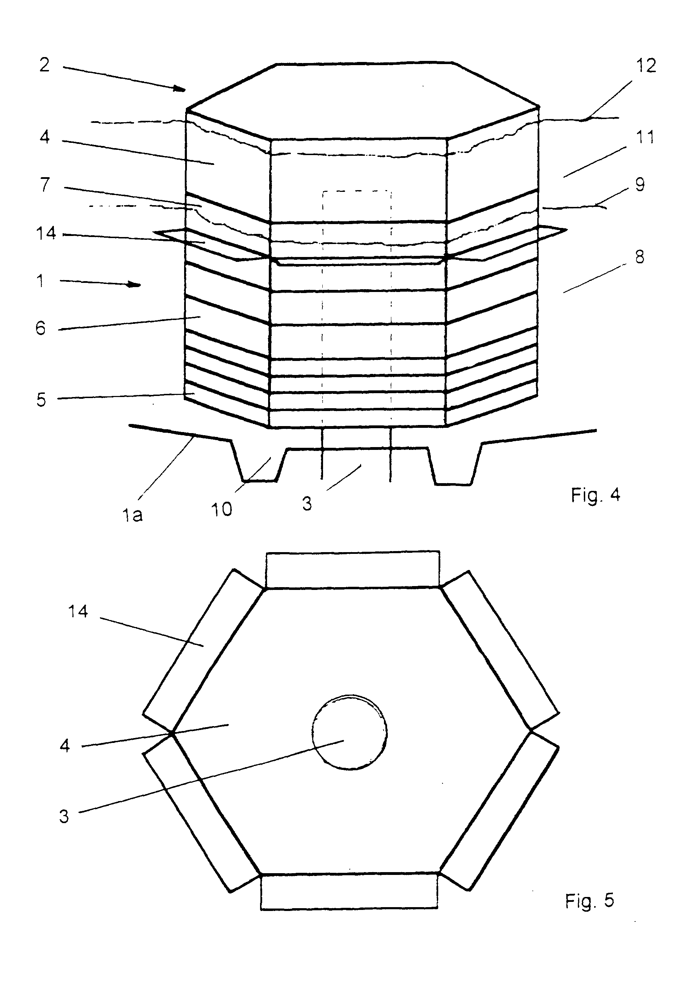

In den Fig. 4 und 5 ist eine Ausführungsform der Vorrichtung 2 gemäß den Fig. 1 - 3 zum Einleiten des Gemisches aus belebtem Schlamm 8 und gereinigtem Abwasser 11 gezeigt. Die Vorrichtung 2 weist das vertikale Zulaufrohr 3 sowie den konzentrisch zu diesem angeordneten Eintragzylinder 4 mit den Zuläufen 5; 6; 7 für das Gemisch aus belebtem Schlamm 8 und gereinigtem Abwasser 11 auf. Das untere Ende des Eintragzylinders 4 endet in einem vorbestimmten Abstand über dem Boden 1a des Nachklärbeckens 1. Der Durchtritt für den sedimentierten Schlamm 8 zu dem Rücklaufschlammabzug 10 ist damit frei.

Der Eintragzylinder 4 ist als ein Vieleck, vorzugsweise ein Sechseck, ausgebildet. Hierdurch werden annähernd gleichmäßige Strömungsverhältnisse beim Eintritt des Gemisches durch die vorbestimmten Zuläufe 5; 6; 7 in das Nachklärbecken 1 erreicht.

Eine weitere günstige äußere Form weist ein runder Eintragzylinder 4 auf.

In der Fig. 4 ist gezeigt, daß der Eintragzylinder 4 einen unteren Zulauf 5 an seinem unteren Ende und einen oberen Zulauf 7 im Bereich seines oberen Endes aufweist. Im Bereich der Klarwasserzone, deren oberen Abschluß die Wasseroberfläche 12 bildet, ist der Eintragzylinder 4 geschlossen.

Zwischen dem unteren Zulauf 5 und dem oberen Zulauf 7 sind mehrere mittlere Zuläufe 6 angeordnet. Die Zuläufe 5; 6; 7 können eine unterschiedliche Höhe aufweisen, wobei die Höhe der Zuläufe 5; 6; 7 nach unten hin abnimmt.

Die Zuläufe 5; 6; sind in zwei unterschiedlichen Höhen gezeigt. Die Höhe der Zuläufe 5; 6; 7 ist im wesentlichen abhängig von dem sie durchfließenden Volumenstrom.

Wie vorstehend dargelegt und in Fig. 4 dargestellt, werden die Zuläufe 5; 6; 7 grundsätzlich dicht unter dem Schlammspiegel 9 geöffnet.

Bei dieser Ausführungsform sind die Zuläufe 5; 6; 7 an der Außenwand des Eintragzylinders 4 durch Verschlußelemente in Form von Klappen 14 verschlossen. Die Klappen 14 werden gleichzeitig am gesamten Umfang geöffnet (Fig. 5). Vorzugsweise sind die Klappen 14 an ihrer oberen Seite angelenkt, so daß sie nach oben geöffnet werden. Dieses hat zwei Vorteile :
- Beim Austritt aus dem Eintragzylinder 4 wird ein Aufwirbeln einzelner Festteilchen nach oben behindert.
- Das Öffnen der Klappe 14 erfolgt in Richtung der Trennzone und nicht in Richtung der sedimentierten Feststoffschicht, so daß ein leichtes öffnen möglich ist.

Da beim Ansteigen des Schlammspiegels 9 der untere Zulauf 5 bzw. der entsprechende mittlere Zulauf 6 vor dem Erreichen durch die Feststoffschicht geschlossen werden kann, treten auch beim Schließen keine Behinderungen auf.

Die Steuerung der Öffnungs- und Schließvorgänge erfolgt über an sich bekannte Steuerungseinrichtungen.

Der Verschluß der Zuläufe 5; 6; 7 kann im Rahmen der Erfindung auch in anderer Weise, beispielsweise durch Verschlußelemente in Form einer Jalousie, erfolgen. Es ist auch möglich, die Verschlußelemente vertikal im Bereich des jeweiligen Zulaufes 5; 6; 7 anzuwenden.

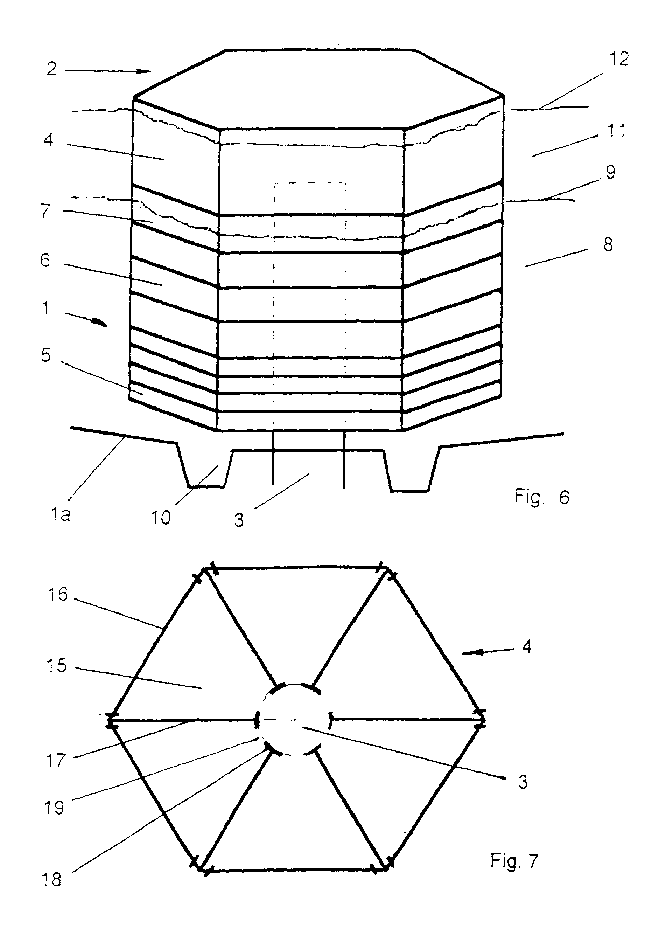

In den Fig. 6 und 7 ist eine weitere Ausführungsform der Vorrichtung 2 gezeigt. Diese entspricht in ihrer Anordnung und dem Aufbau grundsätzlich der vorbeschriebenen Vorrichtung 2.

Es sind auch bei der Vorrichtung 2 zwischen dem unteren Zulauf 5 und dem oberen Zulauf 7 mehrere mittlere Zuläufe 6 angeordnet.

Bei der Vorrichtung 2 sind jedoch die Verschlußelemente unmittelbar am Zulaufrohr 3 angeordnet. Sie weisen einen Schließmechanismus 18 auf, der in unterschiedlicher Weise ausgebildet sein kann.

Die Zuläufe 5; 6; 7 sind durch im wesentlichen horizontal angeordnete Zwischenböden voneinander getrennt, wobei sie dem Strömungsverlauf des Gemisches vom Zulaufrohr 3 zur Außenwand des Eintragzylinders 4 angepaßt sein können.

Im Bereich der Zuläufe 5; 6 ; 7 ist der Eintragzylinder 4 in einzelne Sektoren 15 unterteilt, die durch vertikale Zwischenwände 17 voneinander getrennt sein können. Jeder Sektor 15 weist an der Außenwand des Eintragzylinders 4 eine Öffnung 16 und am Umfang des Zulaufrohres 3 eine verschließbare Rohröffnung 19 auf.

Dabei ist es möglich, die Zwischenwände 17 in einer strömungstechnisch günstigen Form auszubilden.

Durch die Ausbildung der Vorrichtung 2 ist es möglich, den Volumenstrom des Gemisches ohne umfangreiche Turbulenzen in das Nachklärbecken 1 zu leiten.

Im Rahmen des erfindungsgemäßen Verfahrens ist die Ausbildung weiterer Formen der Vorrichtung 2 möglich.

## Patentansprüche

1. Verfahren zur Beschickung von Absetzbecken, dem über ein vertikales Zulaufrohr sowie einen konzentrisch zu diesem angeordneten Eintragzylinder ein Gemisch aus gereinigtem Abwasser und belebtem Schlamm zugeführt und in dem eine Phasentrennung durchgeführt und das gereinigte Abwasser in einer Klarwasserzone aus dem Absetzbecken herausgeführt und sedimentierter Schlamm unter dem Schlammspiegel über einen Rücklaufschlammabzug abgeführt wird,
**dadurch gekennzeichnet, dass**
das Gemisch jeweils in einer im Bereich des Schlammspiegels (9) liegenden Höhenlage durch einen unteren Zulauf (5) oder einen oberen Zulauf (7) oder durch einen zwischen diesen einstellbaren mittleren Zulauf (6) zugeführt wird, wobei die untere Begrenzung des unteren Zulaufs(5) oberhalb der sedimentierten Feststoffschicht des belebten Schlammes (8) und die obere Begrenzung des oberen Zulaufes (7) unterhalb der Klarwasserzone liegt.

2. Verfahren nach Anspruch 1,
**dadurch gekennzeichnet, dass**
das Gemisch dem Absetzbecken so zugeführt wird, dass der Zulauf unterhalb des Schlammspiegels liegt.

3. Verfahren nach Anspruch 2,
**dadurch gekennzeichnet, dass**
das Gemisch dem Absetzbecken so zugeführt wird, dass die obere Begrenzung des mittleren Zulaufes (6) zwischen 0 m - 0,5 m unterhalb des Schlammspiegels (9) liegt.

4. Verfahren nach Anspruch 3,
**dadurch gekennzeichnet, dass**
das Gemisch dem Absetzbecken so zugeführt wird, dass die obere Begrenzung des mittleren Zulaufes (6) zwischen 0,3 m - 0,4 m unterhalb des Schlammspiegels (8) liegt.

5. Verfahren nach Anspruch 1,
**dadurch gekennzeichnet, dass**
bei einem niedrigen Schlammspiegel (9) das Gemisch dem Absetzbecken durch den unteren Zulauf (5) zugeführt wird, so dass der Zulauf (5) oberhalb des Schlammspiegels (9) liegt.

6. Verfahren nach einem der Ansprüche 1 bis 5,
**dadurch gekennzeichnet, dass**
die optimale Höhenlage des mittleren Zulaufes (6) empirisch in Abhängigkeit von einem oder mehreren der folgenden Faktoren eingestellt wird:
- der Höhe des Schlammspiegels (9) im Absetzbecken (1),
- dem Volumenstrom im mittleren Zulauf (6),
- dem Volumenstrom im Rücklaufschlammabzug (10),
- dem Trockensubstanzgehalt des Gemisches aus belebtem Schlamm (8) und dem gereinigtem Abwasser (11),
- dem Schlammvolumenindex des belebtem Schlammes (8)

7. Vorrichtung zur Beschickung von Absetzbecken mit einem sich durch einen Boden (1a) des Absetzbeckens (1) vertikal nach oben erstreckenden Zulaufrohr (3) sowie einem den oberen Abschnitt des Zulaufrohres (3) konzentrisch umschließenden Eintragzylinder (4), dessen unteres Ende in einem vorbestimmten Abstand über dem Boden (1a) des Absetzbeckens (1) endet und über den dem Absetzbecken ein Gemisch aus gereinigtem Abwasser und belebtem Schlamm (8) über mehrere Zulaufebenen zugeführt werden kann, wonach in dem Absetzbecken eine Phasentrennung in sedimentierten Schlamm und eine Klarwasserzone erfolgt, zur Durchführung des Verfahrens nach Anspruch 1,
**dadurch gekennzeichnet, dass**
der Eintragzylinder (4) im Bereich der Klarwasserzone geschlossen ist und einen jeweils verschließbaren oberen und unteren sowie mehrere übereinander liegende, verschließbare mittlere Zuläufe aufweist, wobei die untere Begrenzung des unteren Zulaufs (5) oberhalb der sedimentierten Feststoffschicht des belebten Schlammes (8) und die obere Begrenzung des oberen Zulaufes (7) unterhalb der Klarwasserzone liegt.

8. Vorrichtung nach Anspruch 7,
**dadurch gekennzeichnet, dass**
die obere Begrenzung des oberen Zulaufes (7) in einem Bereich zwischen 0,5 m - 1,0 m unter dem Klarwasserabzug liegt.

9. Vorrichtung nach Anspruch 7 oder 8,
**dadurch gekennzeichnet, dass**
der Umfang des Eintragszylinders (4) als ein Vieleck, vorzugsweise ein Sechseck, ausgebildet ist.

10. Vorrichtung nach Anspruch 7 oder 8,
**dadurch gekennzeichnet, dass**
der Umfang des Eintragszylinders (4) rund ausgebildet ist.

11. Vorrichtung nach einem der Ansprüche 7 bis 10,
**dadurch gekennzeichnet, dass**
die Zuläufe (5;6;7) mit unterschiedlichen Höhen ausgebildet sind.

12. Vorrichtung nach Anspruch 11,
**dadurch gekennzeichnet, dass** die Höhen der Zuläufe (5;6;7) von dem oberen Zulauf (7) bis zu dem unteren Zulauf (5) abnehmen.

13. Vorrichtung nach Anspruch 11,
**dadurch gekennzeichnet, dass**
die Zuläufe (5;6;7) in zwei unterschiedlichen Höhen aus gebildet sind.

14. Vorrichtung nach einem der Ansprüche 7 bis 13,
**dadurch gekennzeichnet, dass**
die Zuläufe (5;6;7) an der Außenwand des Eintragzylinders (4) durch zu öffnende Verschlusselemente verschlossen sind.

15. Vorrichtung nach Anspruch 14,
**dadurch gekennzeichnet, dass**
die Verschlusselemente als horizontal und quer zur Längsachse des Eintragzylinders (4) angeordnete Klappen (14) ausgebildet sind.

16. Vorrichtung nach Anspruch 14,
**dadurch gekennzeichnet, dass**
die Verschlusselemente als Jalousien ausgebildet sind.

17. Vorrichtung nach Anspruch 14,
**dadurch gekennzeichnet, dass**
die sich Verschlusselemente vertikal in Richtung der Längsachse des Eintragzylinders (4) jeweils über die Höhe eines Zulaufes (5;6;7) erstrecken.

18. Vorrichtung nach einem der Ansprüche 7 bis 13,
**dadurch gekennzeichnet, dass**
die Verschlusselemente unmittelbar am Zulaufrohr (3) angeordnet sind und einen Schließmechanismus (18) aufweisen, wobei die Zuläufe (5;6;7) durch im wesentlichen horizontal zueinander angeordnete Zwischenböden voneinander getrennt sind, die sich von dem Umfang des Zulaufrohres (3) bis zu der Außenwand des Eintragzylinders (4) erstrecken, wobei die Außenwand des Eintragzylinders (4) im Bereich jedes Zulaufes (5;6;7) offen ist.

19. Vorrichtung nach Anspruch 18,
**dadurch gekennzeichnet, dass**
die Zwischenböden dem Strömungsverlauf des Gemisches vom Zulaufrohr (3) zur Außenwand des Eintragzylinders (4) angepasst sind.

20. Vorrichtung nach Anspruch 18 oder 19,
**dadurch gekennzeichnet, dass**
im Bereich der Zuläufe (5;6;7) der Eintragzylinder (4) in einzelne Sektoren (15) unterteilt ist, die durch vertikale Zwischenwände (17) voneinander getrennt sind, wobei jeder Sektor (15) in der Außenwand des Eintragzylinders (4) eine Öffnung (16) und am Unfang des Zulaufrohres (3) eine verschließbare Rohröffnung (19) aufweist.

21. Vorrichtung nach Anspruch 20,
**dadurch gekennzeichnet, dass**
die Zwischenwände (17) in einer strömungstechnisch günstigen Form ausgebildet sind.

## Claims

1. A process for feeding sedimentation tanks, to which a mixture consisting of cleaned waste water and activated sludge is supplied by way of a vertical inflow pipe as well as a feeding cylinder arranged concentrically thereto, and in which a phase separation is carried out and the cleaned waste water is drawn out in a clear water zone out of the sedimentation tank, and sedimented sludge below the sludge surface level is withdrawn by way of a return sludge outlet,
wherein
the mixture, in each case in one height level in the zone of the sludge level (9), is supplied through one lower inflow (5) or one upper inflow (7) or through one adjustable middle inflow (6) between these, where the lower limitation of the lower inflow (5) is located above the sedimented solid substance layer of the activated sludge (8) and the upper limitation of the upper inflow (7) is located below the clear water zone.

2. Process according to Claim 1,
wherein
the mixture is supplied to the sedimentation tank in such a way that the inflow is located below the sludge surface level.

3. Process according to Claim 2,
wherein
the mixture is supplied to the sedimentation tank in such a way that the upper limitation of the middle inflow (6) is located between 0 m - 0.5 m below the sludge surface level (9).

4. Process according to Claim 3,
wherein
the mixture is supplied to the sedimentation tank in such a way that the upper limitation of the middle inflow (6) is located between 0.3 m - 0.4 m below the sludge surface level (8).

5. Process according to Claim 1,
**wherein,**
for a low sludge surface level (9), the mixture is supplied to the sedimentation tank through the lower inflow (5) so that the inflow (5) is located above the sludge surface level (9).

6. Process according to one of the Claims 1 to 5,
**wherein**
the optimal height level of the middle inflow (6) is adjustably set empirically in dependence of one or several of the following factors:
- the height of the sludge level surface (9) in the sedimentation tank (1),
- the volume flow in the middle inflow (6),
- the volume flow in the return sludge outlet (10)
- the dry substance content of the mixture of activated sludge (8) and the cleaned waste water (11),
- the sludge volume index of the activated sludge (8).

7. Device for the feeding of sedimentation tanks with an inflow pipe (3) routed through a base (1a) of the sedimentation tank (1) and ranging vertically in the upward direction, as well as with a feeding cylinder (4) concentrically encasing the upper section of the inflow pipe (3), where the lower end of this said feeding cylinder ends in a pre-specified clearance over the base (1a) of the sedimentation tank (1) and, by way of which, a mixture of cleaned waste water and activated sludge (8) can be supplied to the sedimentation tank by way of several inflow levels, whereupon, in the sedimentation tank, a phase separation into sedimented sludge and a clear water zone takes place, for the purpose of executing the process according to Claim 1,
wherein
the feeding cylinder (4) in the area of the clear water zone is closed and has, in each case, a lockable upper and lower inflow as well as several lockable middle inflows lying over each other, where the lower limitation of the lower inflow (5) is located above the sedimented solid substance layer of the activated sludge (8) and the upper limitation of the upper inflow (7) is located below the clear water zone.

8. Device according to Claim 7,
wherein
the upper limitation of the upper inflow (7) is located in a zone between 0.5 m - 1.0 m below the clear water outlet.

9. Device according to Claim 7 or 8,
**wherein**
the perimeter of the feeding cylinder (4) is executed as a polygon, preferentially as a hexagon.

10. Device according to Claim 7 or 8,
wherein
the perimeter of the feeding cylinder (4) is executed in a round shape.

11. Device according to one of the Claims 7 to 10,
**wherein**
the inflows (5; 6; 7) are executed at different heights.

12. Device according to Claim 11,
wherein
the heights of the inflows (5; 6; 7) decline from the upper inflow (7) to the lower inflow (5).

13. Device according to Claim 11,
wherein
the inflows (5; 6; 7) are executed in two different heights.

14. Device according to one of the Claims 7 to 13,
wherein
the inflows (5; 6; 7) at the outer wall of the feeding cylinder (4) are closed by means of locking elements to be opened.

15. Device according to Claim 14,
**wherein**
the locking elements are executed as shutters (14), arranged horizontally and transverse to the longitudinal axis of the feeding cylinder (4).

16. Device according to Claim 14,
wherein
the locking elements are executed as louvers.

17. Device according to Claim 14,
wherein
the locking elements range vertically in the direction of the longitudinal axis of the feeding cylinder (4), in each case over the height of one inflow (5; 6; 7).

18. Device according to one of the Claims 7 to 13,
wherein
the locking elements are arranged immediately at the inflow pipe (3) and have a closing mechanism (18), where the inflows (5; 6; 7) are separated from each other by means of intermediate bottoms arranged essentially horizontally to each other, which range from the perimeter of the inflow pipe (3) up to the outer wall of the feeding cylinder (4), where the outer wall of the feeding cylinder (4) in the area of every inflow (5; 6; 7) is open.

19. Device according to Claim 18,
wherein
the intermediate bottoms are adapted to the flow pattern of the mixture from the inflow pipe (3) to the outer wall of the feeding cylinder (4).

20. Device according to Claim 18 or 19,
**wherein,**
in the area of the inflows (5; 6; 7), the feeding cylinder (4) is subdivided into individual sectors (15) which are separated from each other by means of vertical partition walls (17), where each sector (15) in the outer wall of the feeding cylinder (4) has an opening (16) and a lockable pipe opening (19) at the perimeter of the inflow pipe (3).

21. Device according to Claim 20,
**wherein**
the partition walls (17) are executed in a flow-technical favourable form.

## Revendications

1. Procédé pour alimenter un bassin de décantation , vers lequels on transporte au moyen d' un tube d'alimentation vertical ainsi que d'un cylindre d'alimentation disposé de façon concentrique par rapport audit tube un mélange d'eau nettoyée et de boue activée et dans lequel bassin de décantageon effectue une séparation de phase et on évacue les eaux usées nettoyées dans une zone d'eau claire du bassin de décantage; la boue sédimentée étant evacuée en dessous du niveau de boue au moyen d'une évacuation de boue de reflux,
**caractérisé en ce qu'**on amène , à chaque fois, le mélange à un niveau de hauteur situé dans la zone du niveau de boue (9) au moyen d'une alimentation (5) inférieure ou d'une alimentation supérieure (7) ou d'une alimentation médiane (6) réglable entre l'alimentation inférieure et supérieure; la limitation inférieure de l'alimentation inférieure (5) étant située au dessus de la couche de matière solide sédimentée de la boue (8) activée et la limitation supérieure de l'alimentation (7) supérieure étant située en dessous de la zone d'eau claire.

2. Procédé selon la revendication 1, **caractérisé en ce que** le mélange est conduit vers le bassin de décantation et que l'alimentation est située en dessous du niveau de boue.

3. Procédé selon la revendication 2, **caractérisé en ce que** le mélange est conduit vers le bassin de décantation et. la limitation supérieure de l'alimentation médiane (6) est située entre 0 m et 0,5 m en dessous du niveau de boue (9).

4. Procédé selon la revendication 3, **caractérisé en ce que** le mélange est conduit vers le bassin de décantation et que la limitation supérieure de l'alimentation médiane (6) est située entre 0.3 m et 0,4 m en dessous du niveau de boue (8).

5. Procédé selon la revendication 1, **caractérisé en ce que** le mélange est conduit pour un niveau de boue bas (9) à travers l'alimentation inférieure (5) de manière à ce que l'alimentation (5) soit située au dessus du niveau de boue (9) .

6. Procédé selon une des revendications 1 à 5, **caractérisé en ce que** la position en hauteur de l'alimentation médiane (6) est réglée de manière empirique en fonction d'un ou plusieurs des facteurs suivants :
la hauteur du niveau de boue (9) dans le bassin de décantation (1),
le flux volumique dans l'alimentation médiane (6),
le flux volumique dans l'évacuation de boue de reflux (10),
la teneur en substance sèche du mélange de boue activée (8) et d'eau usée nettoyée (11),
l'index de volume de boue de la boue activée (8).

7. Dispositif pour alimenter un bassin de décantation pour réaliser le procédé selon la revendication 1 comportant un tube d'alimentation (3) s'étendant verticalement vers le haut à travers un fond (la) du bassin de décantation (1) et un cylindre d'alimentation (4) entourant de façon concentrique le tronçon supérieur du tube d'alimentation (3) ; l'extrémité inférieure du cylindre se terminant à une distance prédéterminée au dessus du fond (la) du bassin de décantation (1) et au moyen duquel cylindre on amène vers le bassin de décantation à plusieurs niveaux d'alimentation un mélange d'eau purifiée et de boue activée (8);une séparation de phase en boue sédimentée et une zone d'eau claire étant effectuées ensuite dans le bassin de décantation,
**caractérisé en ce que** le cylindre d'alimentation (4) est fermé dans la zone de l'eau claire et comporte une alimentation supérieure et inférieure pouvant être fermée à chaque fois et plusieurs alimentations médianes, pouvant etre fermées, situées l'une sur l'autre ; la limitation inférieure de l'alimentation inférieure (5) étant située au dessus de la couche de matière solide sédimentée de la boue (8) activée et la limitation supérieure de l'alimentation (7) supérieure étant située en dessous de la zone d'eau claire.

8. Dispositif selon la revendication 7, **caractérisé en ce que** la limitation supérieure de l'alimentation supérieure (7) est située dans une zone située entre 0.5 m et 1,0 m en dessous de l'évacuation de l'eau claire.

9. Dispositif selon la revendication 7 ou 8, **caractérisé en ce que** la circonférence du cylindre d'alimentation (4) est réalisée en tant que polygone, de préférence, un hexagone.

10. Dispositif selon la revendication 7 ou 8, **caractérisé en ce que** la circonférence du cylindre d'alimentation (4) est ronde.

11. Dispositif selon la revendication 7 à 10, **caractérisé en ce que** les alimentations (5 ; 6 ; 7) sont réalisées avec des hauteurs différentes.

12. Dispositif selon la revendication 11, **caractérisé en ce que** les hauteurs des alimentations (5 ; 6 ; 7) diminuent de l'alimentation supérieure (7) jusqu'à l'alimentation inférieure (5).

13. Dispositif selon la revendication 11, **caractérisé en ce que** les alimentations (5 ; 6 ; 7) sont réalisées à deux hauteurs différentes.

14. Dispositif selon la revendication 7 à 13, **caractérisé en ce que** les alimentations (5 ; 6 ; 7) sont fermées sur la paroi extérieure du cylindre d'alimentation (4) par des élements de fermeture ouvrables.

15. Dispositif selon la revendication 14, **caractérisé en ce que** les éléments de fermeture sont réalisés par des clapets (14) disposés de façon horizontale et transversale par rapport à l'axe longitudinal du cylindre d'alimentation (4) .

16. Dispositif selon la revendication 14, **caractérisé en ce que** les éléments de fermeture sont réalisés comme des jalousies.

17. Dispositif selon la revendication 14, **caractérisé en ce que** les éléments de fermeture s'étendent de façon verticale en direction de l'axe longitudinal du cylindre d'alimentation (4) à chaque fois sur la hauteur d'une alimentation (5 ; 6 ; 7).

18. Dispositif selon la revendication 7 à 13, **caractérisé en ce que** les éléments de fermeture sont disposés directement sur le tube d'alimentation (3) et comportent un mécanisme de fermeture (18) les alimentations (5 ; 6 ; 7) étant séparées l'une de l'autre par des fonds intermédiaires disposés de façon essentiellement horizontale , lesquels fonds s'étendent à partir de la circonférence du tube d'alimentation (3) jusqu'à la paroi extérieure du cylindre d'alimentation (4) , la paroi extérieure du cylindre d'alimentation (4) étant ouverte dans la zone de chaque alimentation (5 ; 6 ; 7).

19. Dispositif selon la revendication 18, **caractérisé en ce que** les fonds intermédiaires sont adaptés au flux du mélange venant du tube d'alimentation (3) vers la paroi extérieure du cylindre d'alimentation (4).

20. Dispositif selon la revendication 18 ou 19, **caractérisé en ce que** le cylindre d'alimentation (4) est divisé dans la zone des alimentations (5 ; 6 ; 7) en secteurs individuels (15) séparés l'un de l'autre par des parois intermédiaires (17) ; chaque, secteur (15) présentant dans la paroi extérieure du cylindre d'alimentation (4) une ouverture (16) et la circonférence du tube d'alimentation (3) présentant une ouverture de tube (19) pouvant être fermée.

21. Dispositif selon la revendication 20, **caractérisé en ce que** les parois intermédiaires (17) sont réalisées dans une forme favorable au flux.
